Europäisches Patentamt

European Patent Office

Office européen des brevets

(11) Veröffentlichungsnummer: **0 178 485**
**B1**

(12) **EUROPÄISCHE PATENTSCHRIFT**

(45) Veröffentlichungstag der Patentschrift:
27.09.89

(51) Int. Cl.⁴: **F 02 D 41/14, F 02 B 37/12,**
**F 02 D 33/02**

(21) Anmeldenummer: 85111890.1

(22) Anmeldetag: 20.09.85

(54) Einrichtung zur Regelung des Ladedrucks einer Brennkraftmaschine.

(30) Priorität: 18.10.84 DE 3438175

(43) Veröffentlichungstag der Anmeldung:
23.04.86 Patentblatt 86/17

(45) Bekanntmachung des Hinweises auf die Patenterteilung:
27.09.89 Patentblatt 89/39

(84) Benannte Vertragsstaaten:
DE FR GB

(56) Entgegenhaltungen:
EP-A- 0 117 193
DE-A- 3 129 686
DE-A- 3 135 107
DE-A- 3 303 350
GB-A- 2 123 895
US-A- 4 292 806

(73) Patentinhaber: ROBERT BOSCH GMBH, Postfach 50,
D-7000 Stuttgart 1 (DE)

(72) Erfinder: Buck, Rainer, Dipl.-Ing., Heilbronner Strasse 4,
D-7146 Tamm (DE)
Erfinder: Wessel, Wolf, Ing. grad., Mühlstrasse 27,
D-7141 Oberriexingen (DE)
Erfinder: Stumpp, Gerhard, Dipl.-Ing.,
Bogenstrasse 29H, D-7000 Stuttgart 80 (DE)

ACTORUM AG

**Beschreibung**

Die Erfindung betrifft eine Einrichtung zur Regelung des Ladedrucks einer Brennkraftmaschine gemäss dem Oberbegriff des Anspruchs 1. Eine solche Einrichtung zur Regelung des Ladedrucks ist aus der US-A 4 292 806 bekannt. Dort wird eine Einrichtung beschrieben, bei der der Ladedruck durch Beeinflussung der Turbine 18 und des Kompressors 20 auf einen Sollwert eingeregelt wird. Abhängig von Drehzahl n, Ladeluftdruck und der Lufttemperatur wird ein Sollwert für den Ladedruck vorgegeben. Abhängig von der Differenz zwischen Soll- und Istwert wird eine Sollstellung der Turbinenschaufeln vorgegeben, auf die die Iststellung der Turbinenschaufeln eingeregelt wird. Des weiteren wird abhängig von Drehzahl und Ladedruck eine Sollstellung des Kompressors vorgegeben, auf die die Iststellung des Kompressors eingeregelt wird. Abhängig von der Schalterstellung zweier Schalter 176 und 178 wird ein Vorsteuerwert gebildet, der auf den Ausgang des Ladedruckreglers 158 einwirkt.

Eine ähnliche Einrichtung ist auch aus der EP-A 117 193 bekannt.

Es hat sich nun herausgestellt, dass die Regelung des Ladedrucks einer Brennkraftmaschine mit Hilfe z.B. eines Ladedruckregelkreises unter bestimmten Betriebsbedingungen der Brennkraftmaschine zu langsam und u.U. auch falsch reagiert, und insgesamt gesehen zu fehlerempfindlich arbeitet.

**Vorteile der Erfindung**

Die erfindungsgemässe Einrichtung zur Regelung des Ladedrucks einer Brennkraftmaschine mit den Merkmalen des Hauptanspruchs hat gegenüber dem genannten Stand der Technik den Vorteil, dass mit ihr eine schnelle und fehlerunempfindliche Ladedruckregelung möglich ist. Dies wird dadurch erreicht, dass zusätzlich zum Ladedruckregelkreis die Stellung des Abgasturboladers des weiteren noch von Vorsteuerwerten beeinflusst wird, die eine Funktion der Last und der Motortemperatur bzw. der Last und der Batteriespannung sind.

Durch Beschränkungen der Reglerausgangssignale ist es dabei in besonders vorteilhafter Weise möglich, die Fehlerempfindlichkeit der gesamten Einrichtung noch weiter zu senken. Weitere Vorteile der Erfindung ergeben sich in Verbindung mit den Unteransprüchen aus der nachfolgenden Beschreibung der Ausführungsbeispiele, sowie aus der Zeichnung.

**Zeichnung**

Ausführungsbeispiele der Erfindung sind in der Zeichnung angegeben und in der nachfolgenden Beschreibung näher erläutert. Dabei zeigt Figur 1 ein Blockschaltbild einer erfindungsgemässen Regelung eines Turboladers mit Vorsteuerung, Figur 2 das Verhalten der dynamischen Vorsteuerung, sowie Figur 3 die indirekte Ladedruckregelung über die Luftmenge.

Beschreibung der Ausführungsbeispiele

Die Erfindung betrifft eine Einrichtung zur Regelung des Ladedrucks einer Brennkraftmaschine. Die Anwendung der erfindungsgemässen Einrichtung ist dabei nicht auf einen bestimmten Brennkraftmaschinentyp beschränkt, sondern allgemein z.B. bei Dieselbrennkraftmaschinen, Benzinbrennkraftmaschinen usw. einsetzbar. Ebenfalls ist die Erfindung nicht auf einen speziellen schaltungstechnischen Aufbau beschränkt, sondern ausser in analoger Schaltungstechnik auch in digitaler Form, also z.B. mit Hilfe eines entsprechend programmierten digitalen Rechners realisierbar.

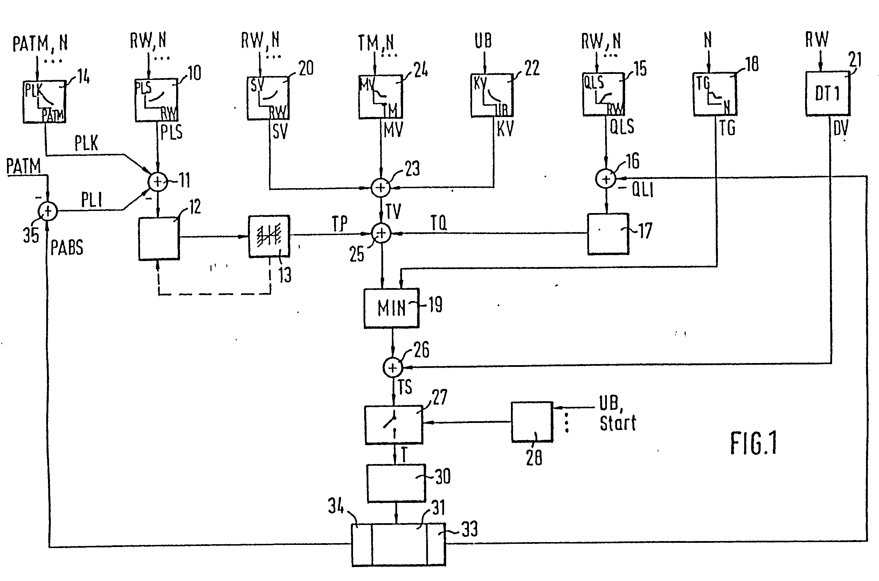

Die Figur 1 zeigt ein Blockschaltbild einer erfindungsgemässen Regelung eines Turboladers mit Vorsteuerung. In dieser Figur erzeugt ein Ladedrucksollkennfeld 10 in Abhängigkeit vom Regelweg RW und der Drehzahl N ein Ausgangssignal, das den gewünschten relativen Ladedruck PLS darstellt. Mit Hilfe der Differenzbildung 11 wird der gewünschte relative Ladedruck PLS mit einem Signal bezüglich des tatsächlichen relativen Ladedrucks PLI verknüpft. Das durch die Verknüpfung entstehende und am Ausgang der Differenzbildung 11 anstehende Signal wird einer Regelung 12 zugeführt. Bei dieser Regelung 12 kann es sich z.B. um eine Regelung mit Proportional-Integral-Verhalten handeln. Weiter ist eine Höhenkorrektur 14 vorgesehen, die in Abhängigkeit vom Atmosphärendruck PATM und gegebenenfalls auch noch in Abhängigkeit von der Drehzahl N der Brennkraftmaschine ein Ausgangssignal PLK erzeugt, das ebenfalls an die Differenzbildung 11 angeschlossen ist, und dadurch auf die Regelung 12 einwirkt. In Serie zur Regelung 12 liegt dann die Beschränkung 13, mit deren Hilfe das Ausgangssignal der Regelung 12 auf bestimmte, vorgebbare Kennwerte beschränkt wird. Bei dem Ausgangssignal der Beschränkung 13 handelt es sich um ein Steuersignal infolge der Ladedruckregelung, das mit TP bezeichnet ist. Ein Luftmengensollkennfeld 15 ist mit einem Signal bezüglich des Regelwegs RW und bezüglich der Drehzahl N beaufschlagt und bildet in Abhängigkeit davon ein Ausgangssignal, bei dem es sich um die gewünschte angesaugte Luftmenge QLS handelt. Mit Hilfe einer Differenzbildung 16 wird die gewünschte angesaugte Luftmenge QLS mit einem Signal bezüglich der tatsächlich angesaugten Luftmenge QLI verknüpft, wobei dann das Ausgangssignal der Differenzbildung 16 der Regelung 17 zugeführt ist. Bei dieser Regelung 17 kann es sich ebenfalls wieder um eine Regelung mit Proportional-Integral-Verhalten handeln, wobei das Ausgangssignal der Regelung 17 ein Steuersignal infolge der Luftmengenregelung darstellt, und mit TQ bezeichnet ist. Einer statischen Vorsteuerung 20 wird das Signal RW bezüglich des Regelwegs und das Signal N bezüglich der Drehzahl der Brennkraftmaschine zugeführt. In Abhängigkeit davon bildet die statische Vorsteuerung 20 ein Ausgangssignal SV, das an die Summierung 23 angeschlossen ist. In Abhängigkeit der Batteriespannung UB der Brennkraftmaschine erzeugt eine Korrektur der Vorsteuerung 22 ein Ausgangssignal, das mit KV bezeichnet ist, und ebenfalls der Summierung 23 zugeleitet ist. Zuletzt ist eine Temperaturvorsteuerung 24 vorgesehen, die abhängig von der Motortemperatur TM und gegebenenfalls auch noch von der Drehzahl N der Brennkraftmaschine ein Ausgangssignal MV bildet, das wiederum der Summierung 23 zugeführt ist. Die Summierung 23 verknüpft die Signale SV, KV und MV zu einem Ausgangssignal, nämlich dem Steuersignal infolge der Vorsteuerung, das mit TV bezeichnet ist. Eine weitere Summierung 25 ist mit den Steuersignalen TP, TQ und TV beaufschlagt und verknüpft diese zu einem Ausgangssignal, das einer Minimalauswahl 19 zugeführt ist. Die Minimalauswahl 19 ist des weiteren noch von einem Grenzwert TG beaufschlagt, der von einer Begrenzung 18 in Abhängigkeit von der Drehzahl N der Brennkraftmaschine gebildet wird. Die Begrenzung 18 zusammen mit der Minimalauswahl 19 erfüllen dabei die Funktion einer Maximalwertbegrenzung der Werte des Ausgangssignals der Summierung 25 auf die vorgebbaren Werte der Begrenzung 18. An eine dynamische Vorsteuerung 21 ist das Signal bezüglich des Regelwegs RW angeschlossen. Als Funktion von RW erzeugt die dynamische Vorsteuerung ein Ausgangssignal, das mit DV bezeichnet ist, und das einer Summation 26 zugeführt wird. Die Summation bildet dann abhängig von DV und von dem Ausgangssignal der Minimalauswahl 19 ein Summationssignal, das mit TS gekennzeichnet ist, und das an eine Unterbrechung 27 angeschlossen ist. Die Unterbrechung 27 wird dabei von einer Ansteuerung 28 entweder in ihren offenen oder in ihren geschlossenen Zustand gesteuert. Die Ansteuerung 28 führt dieses Öffnen und Schliessen dabei in Abhängigkeit von wenigstens der Batteriespannung UB und/oder einem Signal, das den Betriebszustand des Startens der Brennkraftmaschine anzeigt, durch. Ist die Unterbrechung 27. z.B. geschlossen, so hat dies zur Folge, dass das Ausgangssignal TS der Summierung 26 direkt einem Wandler 30 zugeführt ist. Dieses Ansteuersignal des Wandlers 30 ist dabei mit T gekennzeichnet. Bei dem Wandler 30 kann es sich z.B. um einen elektropneumatischen Wandler handeln, der das an seinem Eingang anliegende elektrische Signal z.B. in einen bestimmten Unterdruck umformt. Eine Veränderung des elektrischen Signals am Eingang des Wandlers 30 bedingt dadurch eine Veränderung des besagten Unterdrucks. In Serie zum Wandler 30 ist ein Abgasturbolader 31 angebracht. Dieser Turbolader 31 kann z.B. mit dem vom Wandler 30 veränderbaren Unterdruck z.B. in seiner Geometrie derart geändert werden, dass eine Änderung des Unterdrucks z.B. eine Änderung des Ladedrucks der Brennkraftmaschine nach sich zieht. Insgesamt ist es also mit Hilfe des Wandlers 30 und des Turboladers 31 möglich, in Abhängigkeit von dem Signal T den Ladedruck der Brennkraftmaschine zu beeinflussen. Zuletzt ist in der Figur 1 ein Luftmengenmesser mit der Bezugsziffer 33 gekennzeichnet, sowie ein Ladedruckfühler mit dem Kennzeichen 34. Das Ausgangsignal des Luftmengenmessers 33 ist die tatsächlich angesaugte Luftmenge QLI, die, wie schon ausgeführt wurde, der Differenzbildung 16 zugeführt ist. Das Ausgangssignal des Ladedruckfühlers 34 hingegen ist ein Signal bezüglich des absoluten Ladedrucks PABS, das mit einem Signal bezüglich des Atmosphärendrucks PATM verknüpft den schon erwähnten tatsächlichen relativen Ladedruck PLI ergibt. Die Verknüpfung wird dabei von einer Differenzbildung 35 vorgenommen. Das zuletzt genannte Signal PLI ist dann an die Differenzbildung 11 angeschlossen.

Der Ladedruckregelkreis, der hauptsächlich aus dem Ladedrucksollkennfeld 10, der Differenzbildung 11 und der Regelung 12 besteht, ist an sich bekannt. Er hat die Aufgabe, den tatsächlichen relativen Ladedruck PLI auf den Wert des gewünschten relativen Ladedrucks PLS zu regeln. Die der Regelung 12 nachfolgende Beschränkung 13 gewährleistet, dass in dem besagten Regelkreis die Regelung 12 nur eine begrenzte Eingriffsmöglichkeit hat. Ein fehlerhafter Wert des tatsächlichen relativen Ladedrucks PLI hat aufgrund der Beschränkung 13 nur bis zu einem gewissen Grade eine fehlerhafte Ansteuerung des Wandlers 30 und damit des Turboladers 31 zur Folge. Besonders vorteilhaft ist es dabei, während der Zeitdauer, in der das Ausgangssignal der Regelung 12 von der Beschränkung 13 auf den bestimmten, vorgebbaren Wert eingeschränkt ist, die Regelung 12 anzuhalten, also wenigstens das Ausgangssignal der Regelung 12 ebenfalls auf dem genannten Grenzwert festzuhalten. Es findet also eine sogenannte Klammerung z.B. des Integralanteils der Regelung 12 statt. Dies ist in der Figur 1 durch die strichpunktierte Pfeilverbindung von der Beschränkung 13 zur Regelung 12 angedeutet. Selbstverständlich ist es auch möglich, im entsprechenden Anwendungsfall, also wenn z.B. keine Notwendigkeit für eine Beschränkung 13 besteht, dieselbe ganz entfallen zu lassen.

Der Luftmengenregelkreis, der hauptsächlich aus dem Luftmengensollkennfeld 15, der Differenzbildung 16 und der Regelung 17 besteht, hat die Aufgabe, die tatsächlich angesaugte Luftmenge QLI auf den Wert der gewünschten tatsächlichen Luftmenge QLS zu regeln. Dabei ist es selbstverständlich auch möglich, dass, als Erweiterung zur dargestellten Figur 1, der Regelung 17 analog zum Ladedruckregelkreis eine Beschränkung des Ausgangssignals nachfolgt.

Die gesamte Vorsteuerung, die aus der statischen Vorsteuerung 20, der Temperaturvorsteuerung 24 und der Korrektur der Vorsteuerung 22 besteht, hat die Aufgabe, abhängig von ihren jeweiligen Eingangssignalen ein Ausgangssignal zu bilden, mit dessen Hilfe der Wandler 30 und damit der Abgasturbolator 31 beeinflusst wird.

Alle drei Steuersignale, also das Ausgangssignal des Ladedruckregelkreises TP, das Ausgangssignal des Luftmengenregelkreises TQ und das Ausgangssignal der Vorsteuerung TV bilden dann ein Signal zur Ansteuerung des Wandlers 30 und beeinflussen dadurch den Abgasturbolader 31. Dieses Signal wird dann mit Hilfe der Minimalauswahl 19 und der Begrenzung 18 auf vorgebbare Maximalwerte begrenzt, um danach noch mit dem Ausgangssignal DV der dynamischen Vorsteuerung 21 verknüpft zu werden. Das Signal TS steuert letztlich über die geschlossene Unterbrechung 27 den Wandler 30.

Mit Hilfe des Luftmengenmessers 33 wird der Luftmengenregelkreis, sowie mit Hilfe des Ladedruckfühlers 34 der Ladedruckregelkreis geschlossen.

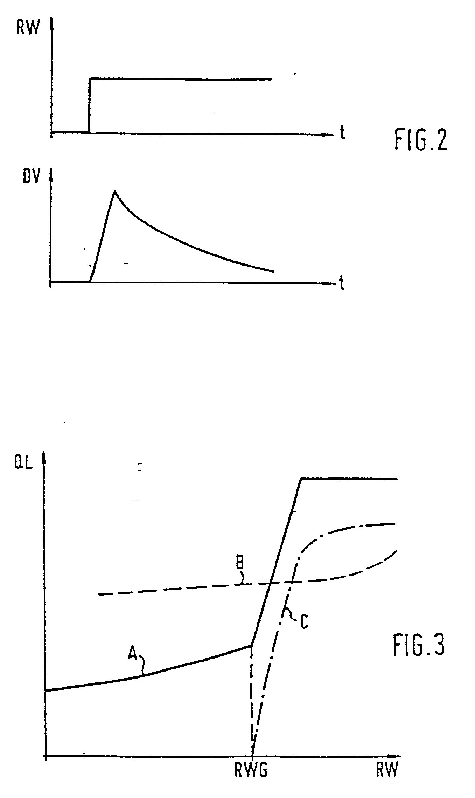

Bei dem Ladedrucksollkennfeld 10 und dem Luftmengensollkennfeld 15 handelt es sich um dreidimensionale Kennfelder mit zwei unabhängigen Eingangsvariablen, die in Abhängigkeit von der jeweiligen Brennkraftmaschine empirisch ermittelt werden. Bei der statischen Vorsteuerung 20 handelt es sich ebenfalls um ein dreidimensionales Kennfeld, das in analoger Weise bestimmt wird. Die Korrektur der Kennlinie 22 hingegen umfasst nur eine Kennlinie, mit deren Hilfe Schwankungen der Batteriespannung UB ausgeglichen werden. Auch bei der Temperaturvorsteuerung 24 und der Höhenkorrektur 14 handelt es sich um wenigstens zweidimensionale, empirisch ermittelte Kennfelder. Die dynamische Vorsteuerung 21 kann z. B. ein sogenanntes DT1-Verhalten aufweisen. Dies bedeutet, dass es sich bei der dynamischen Vorsteuerung 21 etwa um einen realen Differenzierer handelt. Das Verhalten einer derartigen dynamischen Vorsteuerung ist der Figur 2 zu entnehmen. Springt der Regelweg RW um einen bestimmten Betrag z. B. wie dargestellt nach oben, so hat dies zur Folge, dass das Ausgangssignal DV der dynamischen Vorsteuerung 21 das in der Figur 2 dargestellte Verhalten zeigt. Verändert sich der Regelweg RW in die Gegenrichtung, so hat dies entsprechende Reaktionen des Ausgangssignals DV der dynamischen Vorsteuerung 28 zur Folge. Dieses in der Figur 2 dargestellte Verhalten der dynamischen Vorsteuerung ist an sich, wie schon genannt, unter dem Begriff eines DT1-Verhaltens bekannt.

Die Figur 1 zeigt, wie beschrieben, das Blockschaltbild der erfindungsgemässen Regelung eines Turboladers mit Vorsteuerung. Insgesamt besitzt diese Regelung, wie ebenfalls ausgeführt wurde, drei Zweige, nämlich die Ladedruckregelung, die Luftmengenregelung bzw. indirekte Ladedruckregelung, sowie die Vorsteuerung. Besonders vorteilhaft ist es nun, die beiden Regelungszweige so zu dimensionieren, dass sie sich in ihrem Einfluss auf den Abgasturbolader ablösen. Im dargestellten Ausführungsbeispiel bedeutet dies, das z. B. die Ladedruckregelung und/oder die Vorsteuerung nur bei relativ kleinen Werten des Regelwegs RW den Abgasturbolader beeinflusst, während der Einfluss der Luftmengenregelung erst bei relativ grossen Werten des Regelwegs RW wirksam wird. Erreicht wird diese Ablösung beim beschriebenen Ausführungsbeispiel der Figur 1 einerseits mit Hilfe der Beschränkung 13, sowie andererseits mittels des Luftmengensollkennfelds 15.

Die Figur 3 zeigt die indirekte Ladedruckregelung über die Luftmenge. Mit Hilfe der Figur 3 soll jetzt die besagte Ablösung der Ladedruckregelung durch die Luftmengenregelung näher beschrieben werden. Die Figur 3 zeigt ein Diagramm, auf dessen Abszisse der Regelweg RW, und auf deren Ordinate die Luftmenge QL aufgetragen ist. Ein bestimmter, vorgebbarer Regelweg ist mit RWG gekennzeichnet. Insgesamt zeigt das Diagramm der Figur 3 drei Kurven A, B und C. Unter der Voraussetzung, dass zusätzlich zu der erfindungsgemässen Regelung eines Turboladers mit Vorsteuerung gemäss der Figur 1 auch eine Regelung der Abgasrückführrate der Brennkraftmaschine vorhanden ist, zeigt die Kurve A den Verlauf der Soll-Luftmenge für die Abgasrückführraten-Regelung. Für RW < RWG weist die Kurve einen leicht ansteigenden Verlauf der gewünschten Luftmenge auf. Die tatsächlich der Brennkraftmaschine zugeführter Luftmenge wird mit Hilfe des Luftmengenmessers gemessen. Soll- und Istwert werden miteinander verglichen und von der Abgasrückführraten-Regelung wird der Istwert auf den Sollwert geregelt. In dem Bereich RW < RWG wird gemäss der Figur 1 der Ladedruck der Brennkraftmaschine nur über die Ladedruckregelung beeinflusst. Die Luftmengenregelung greift in diesem Bereich nicht ein, da aufgrund des Mengensollkennfelds 15 für kleine Regelwege RW die gewünschte angesaugte Luftmenge QLS = Null ist, und die Regelung 17 nur positive Ausgangssignale TQ abgeben kann. Insgesamt wird also bei Regelwegen RW < RWG die der Brennkraftmaschine zugeführte Luftmenge mit Hilfe der Abgasrückführraten-Regelung gemäss der Kurve A der Figur 3 beeinflusst, sowie der an der Brennkraftmaschine anstehende Ladedruck mit Hilfe der Ladedruckregelung gemäss der Figur 1. Bei Regelwegen RW, die grösser sind als der Grenzwert RWG, wird der Sollwert der Abgasrückführraten-Regelung gemäss der Kurve A der Figur 3 auf einen hohen Wert gesetzt. Dies bewirkt, dass die Abgasrückführraten-Regelung das Abgasrückführventil vollkommen schliesst, also keine Abgasrückführung mehr stattfindet. Der Grund für dieses Vorgehen liegt in der Tatsache, dass bei Regelwegen RW > RWG die von der Brennkraftmaschine benötigte Frischluftzufuhr nicht mehr abgedeckt werden kann, wenn ein Teil der der Brennkraftmaschine zugeführten Luftmenge aus Abgas besteht. Im Zusammenhang mit der Ladedruckregelung wirkt im Bereich RW > RWG die Beschränkung 13. Dies bedeutet, dass das Steuersignal TP in besagtem Bereich einen maximalen Wert einnimmt und deshalb die Regelung des Ladedrucks der Brennkraftmaschine nicht mehr durchführen kann. Demgegenüber ist aus dem Diagramm des Luftmengensollkennfelds 15 der Figur 1 zu erkennen, dass für Regelwege RW > RWG der Sollwert QLS grösser als Null ist. Es ist dabei darauf hinzuweisen, dass die im Diagramm des Luftmengensollkennfelds 15 angegebene Kurve der Kurve C der Figur 3, also der Solluftmenge für die Luftmengenregelung entspricht. Für Regelwege RW > RWG wird demnach die Luftmengenregelung gemäss der Figur 1 aktiv. Es findet also insgesamt bei dem Grenzwert RWG eine Ablösung statt, und zwar wird die Ladedruckregelung von der Luftmengenregelung abgelöst. Die des weiteren in der Figur 3 gezeigte Kurve B stellt die Luftmenge QL als Funktion von Regelweg RW dar, die aufgrund der Vorsteuerung, also infolge des Steuersignals TV den Wandler 30 und damit den Abgasturbolader 31 beeinflusst. Der Verlauf der Kurve B wird empirisch ermittelt, und zwar mit dem Ziel, möglichst schnelle Reaktionen des Turboladers auf Änderungen des Regelwegs zu erreichen.

Im Zusammenhang mit der Beschreibung der Figur 3 wurde die Voraussetzung gemacht, dass zusätzlich zur erfindungsgemässen Regelung der Figur 1 auch eine Abgasrückführraten-Regelung vorhanden ist. Dies ist zwingend jedoch nicht notwendig. Bei einem System ohne Abgasrückführraten-Regelung ändert sich am Prinzip der erfindungsgemässen Regelung der Figur 1 nichts, es müssen nur die Kennlinien und Kennfelder an den entsprechenden Anwendungsfall angepasst werden.

Auch ist es möglich, die erfindungsgemässe Regelung der Figur 1 dahingehend zu vereinfachen, dass nur einer der beiden Regelkreise zur Einstellung des Ladedrucks der Brennkraftmaschine herangezogen wird.

In einem derartigen Anwendungsfall ist jedoch eine Ablöseregelung nicht mehr möglich. Die schnelle Reaktion des Abgasturboladers auf Regelwegänderungen wird jedoch auch in diesen Fällen mit Hilfe der Vorsteuerung erreicht.

Es besteht auch die Möglichkeit, die Beschränkung 13 erst nach der Summation 25 anzubringen, insbesondere wenn z. B. die indirekte Ladedruckregelung über die Luftmenge nicht vorgesehen ist. In diesem Fall kann dann gegebenenfalls die Minimalauswahl 19 und die Begrenzung 18 entfallen. Die Funktion der beiden Blöcke 18 und 19 kann dann z. B. durch eine entsprechende Dimensionierung der Beschränkung 13 ersetzt werden. Die Rückkopplung von der Beschränkung 13 zur Regelung 12 und gegebenenfalls auch zur Regelung 17 ist auch im Falle der vorliegenden Änderungsmöglichkeit unter Umständen notwendig.

Im Grunde genommen kann die erfindungsgemässe Regelung der Figur 1 auf vielerlei Arten verändert und/oder vereinfacht und/oder erweitert werden. Die Realisierung der einzelnen Elemente des Blockschaltbildes der Figur 1 stellt dabei für einen Fachmann kein grundlegendes Problem dar. Der Kern der Erfindung jedoch liegt in der Vorsteuerung, also in der Tatsache, dass unabhängig von irgendwelchen Regelungen der Abgasturbolader mittels vorgegebener Werte in vorteilhafter Weise gesteuert wird.

Im Blockschaltbild der Figur 1 wird der tatsächliche relative Ladedruck PLI durch Differenzbildung des absoluten Ladedrucks PABS und des Atmosphärendrucks PATM gebildet. Es besteht diesbezüglich jedoch auch die Möglichkeit, den tatsächlichen relativen Ladedruck PLI direkt mit Hilfe des Ladedruckfühlers 34 zu messen. Die genannte Differenzbildung 35 wird dann überflüssig.

Bei der Beschreibung der Figur 1 wurde z. B. von Steuersignalen TP oder TV gesprochen. Bei diesen Signalen kann es sich z. B. um analoge Signale handeln, wobei dann das Signal T zur Ansteuerung des Wandlers 30 z. B. einen Strommittelwert darstellt. Es ist aber auch möglich, dass es sich bei den besagten Signalen um Tastverhältnisse oder andere digitale Signale handelt. In diesen zuletzt genannten Fällen ist dann unter Umständen im Wandler 30 eine entsprechende Anpassung und/oder Umwandlung notwendig.

Des weiteren wurde im Zusammenhang mit der Beschreibung der Figur 1 der Regelweg RW als eine mögliche Eingangsgrösse der erfindungsgemässen Regelung genannt. Es ist jedoch auch möglich, dass statt des Signals RW bezüglich des Regelwegs andere Signale gleichwertig verwendet werden, so z. B. ein Signal bezüglich der Fahrpedalstellung und/oder ein Signal bezüglich der Einspritzmenge usw. Allgemein stellt also das Signal RW ein Signal bezüglich der Last der Brennkraftmaschine dar.

In besonders vorteilhafter Weise ist es bei der erfindungsgemässen Regelung möglich, den Turbolader zu überwachen. Dies kann z. B. in der Weise geschehen, dass das Ausgangssignal der Differenzbildung 11, also die Differenz zwischen tatsächlichem und gewünschtem relativem Ladedruck von der Regelung 12 dahingehend geprüft wird, ob dieses Differenzsignal über eine längere Zeitdauer einen bestimmten Grenzwert überschreitet. Ist dies der Fall, so bedeutet dies, dass die erfindungsgemässe Regelung den Ladedruck der Brennkraftmaschine nicht auf die gewünschten Werte regeln kann. In diesem Fall kann die Regelung 12 dann z. B. veranlassen, dass der Ladedruck der Brennkraftmaschine auf minimale Werte gesteuert wird, und/oder dass bei einer elektronisch gesteuerten oder geregelten Kraftstoffeinspritzung die eingespritzte Kraftstoffmenge nur noch minimale Werte aufweist. Selbstverständlich sind auch andere Möglichkeiten der Beeinflussung der Brennkraftmaschine in dem genannten Fehlerfall denkbar.

## Patentansprüche

1. Einrichtung zur Regelung des Ladedrucks einer Brennkraftmaschine mit einem verstellbaren Abgasturbolader (31), mit Gebern für eine Grösse bezüglich der der Brennkraftmaschine zugeführten Luft, mit einem Ladedruckregelkreis zur Beeinflussung der Stellung des Abgasturboladers in Abhängigkeit von der gemessenen Grösse bezüglich der der Brennkraftmaschine zugeführten Luft, und mit einer von speziellen Betriebskenngrössen abhängigen Vorsteuerung, dadurch gekennzeichnet, dass die Vorsteuerwerte in Abhängigkeit von Last und wenigstens Motortemperatur oder Batteriespannung wenigstens einem Vorsteuerkennfeld (20, 22, 24) entnommen werden.

2. Einrichtung nach Anspruch 1, dadurch gekennzeichnet, dass dem Ladedruckregelkreis ein Ladeluftmengenregelkreis zugeordnet ist.

3. Einrichtung nach Anspruch 1 oder 2, dadurch gekennzeichnet, dass weitere Vorsteuerwerte dynamisch gebildet werden.

4. Einrichtung nach Anspruch 3, dadurch gekennzeichnet, dass die weiteren Vorsteuerwerte mit Hilfe einer realen Differentiation (21) gebildet werden.

5. Einrichtung nach wenigstens einem der Ansprüche 1 bis 4, dadurch gekennzeichnet, dass die Vorsteuerwerte abhängig von der Last (21) der Brennkraftmaschine und/oder der Drehzahl (18) der Brennkraftmaschine gebildet werden.

6. Einrichtung nach wenigstens einem der Ansprüche 1 bis 5, dadurch gekennzeichnet, dass die Vorsteuerwerte in Abhängigkeit von einem Signal, das den Betriebszustand des Startens (28) der Brennkraftmaschine signalisiert, den Turbolader (31) beeinflussen.

7. Einrichtung nach wenigstens einem der Ansprüche 1 bis 6, dadurch gekennzeichnet, dass das Ausgangssignal des Ladedruckregelkreises (13) beschränkt wird.

8. Einrichtung nach Anspruch 7, dadurch gekennzeichnet, dass während einer Beschränkung des Ausgangssignals des Ladedruckregelkreises gleichzeitig auch die Beschränkung auf die Ladedruckregelung einwirkt.

9. Einrichtung nach wenigstens einem der Ansprüche 1 bis 8, dadurch gekennzeichnet, dass der Sollwert des Luftmengenregelkreises für kleine Lasten der Brennkraftmaschine gleich Null ist.

10. Einrichtung nach wenigstens einem der Ansprüche 1 bis 9, dadurch gekennzeichnet, dass das den Turbolader beeinflussende Signal auf Maximalwerte beschränkt wird.

11. Einrichtung nach wenigstens einem der Ansprüche 1 bis 10, dadurch gekennzeichnet, dass der Istwert des relativen Ladedrucks durch Differenzbildung (35) des Istwerts des absoluten Ladedrucks und des Atmosphärendrucks gebildet wird.

12. Einrichtung nach wenigstens einem der Ansprüche 1 bis 11, dadurch gekennzeichnet, dass, wenn die Differenz zwischen dem Istwert des relativen Ladedrucks und dem Sollwert des relativen Ladedrucks einen bestimmten, vorgebbaren Wert während einer bestimmten, vorgebbaren Zeitdauer überschreitet, der Abgasturbolader auf bestimmte, vorgebbare Werte gesteuert wird.

13. Einrichtung nach Anspruch 12, dadurch gekennzeichnet, dass zusätzlich die der Brennkraftmaschine zugeführte Kraftstoffmenge auf bestimmte, vorgebbare Werte gesteuert wird.

14. Einrichtung nach Anspruch 11 oder 12, dadurch gekennzeichnet, dass der Istwert des relativen Ladedrucks in Abhängigkeit vom Atmosphärendruck korrigiert wird.

**Claims**

1. Apparatus for controlling the charging pressure of an internal-combustion engine having an adjustable exhaustgas turbocharger (31), transducers for a quantity relating to the air supplied to the internal-combustion engine, a charging pressure control circuit to influence the position of the exhaust-gas turbocharger as a function of the measured quantity relating to the air supplied to the internal-combustion engine, and a pilot control system as a function of specific operating parameters, characterized in that the pilot control values are taken from at least one pilot control graph (20, 22, 24) as a function of load and of least engine temperature or battery voltage.

2. Apparatus according to Claim 1, characterized in that a charging air volume control circuit is associated with the charging pressure control circuit.

3. Apparatus according to Claim 1 or 2, characterized in that further pilot control values are formed dynamically.

4. Apparatus according to Claim 3, characterized in that the further pilot control values are formed by means of a real differentiation (21).

5. Apparatus according to at least one of Claims 1 to 4, characterized in that the pilot control values are formed as a function of the load (21) of the internal-combustion engine and/or of the speed (18) of the internal-combustion engine.

6. Apparatus according to at least one of Claims 1 to 5, characterized in that the pilot control values influence the turbocharger (31) as a function of a signal which signals the operating state of starting (28) of the internal-combustion engine.

7. Apparatus according to at least one of Claims 1 to 6, characterized in that the output signal of the loading pressure control circuit (13) is limited.

8. Apparatus according to Claim 7, characterized in that during a limitation of the output signal of the charging pressure control circuit, the limiter also influences the charging pressure control system simultaneously.

9. Apparatus according to at least one of Claims 1 to 8, characterized in that the desired value of the air volume control circuit for small loads of the internal-combustion engine equals zero.

10. Apparatus according to at least one of Claims 1 to 9, characterized in that the signal which influences the turbocharger is limited to maximum values.

11. Apparatus according to at least one of Claims 1 to 10, characterized in that the acutal value of the relative charging pressure is formed by subtraction (35) of the actual value of the absolute charging pressure and the atmospheric pressure.

12. Apparatus according to at least one of Claims 1 to 11, characterized in that when the difference between the actual value of the relative charging pressure and the desired value of the relative charging pressure exceeds a given prescribable value during a given prescribable period, the exhaust-gas turbocharger is controlled to given prescribable values.

13. Apparatus according to Claim 12, characterized in that the fuel quantity supplied to the internal-combustion engine is additionally controlled to given prescribable values.

14. Apparatus according to Claim 11 or 12, characterized in that the actual value of the relative charging pressure is corrected as a function of the atmospheric pressure.

**Revendications**

1. Dispositif de régulation de la pression de suralimentation d'un moteur à combustion interne, avec un turbocompresseur entraîné par les gaz d'échappement (31) réglable, avec des transmetteurs pour une grandeur concernant l'air alimenté au moteur à combustion interne, avec un circuit de réglage de la pression de suralimentation pour influencer le réglage du turbocompresseur en fonction de la grandeur mesurée concernant l'air alimenté au moteur à combustion interne, et avec une commande pilote dépendant de caractéristiques de fonctionnement spéciales, caractérisé en ce que les valeurs de commande pilote, en fonction de la charge et d'au moins la température du moteur ou la tension de batterie, sont prélevées d'au moins un champ de caractéristique de commande pilote (20, 22, 24).

2. Dispositif selon la revendication 1, caractérisé en ce qu'un circuit de réglage du débit d'air de suralimentation est affecté au circuit de réglage de la pression de suralimentation.

3. Dispositif selon la revendication 1 ou 2, caractérisé en ce que d'autres valeurs de commande pilote sont formées dynamiquement.

4. Dispositif selon la revendication 3, caractérisé en ce que les autres valeurs de commande pilote sont formées à l'aide d'une dérivation réelle (21).

5. Dispositif selon au moins l'une des revendications 1 à 4, caractérisé en ce que les valeurs de commande pilote sont formées en fonction de la charge (21) du moteur à combustion interne et/ou de la vitesse de rotation (18) du moteur à combustion interne.

6. Dispositif selon au moins l'une des revendications 1 à 5, caractérisé en ce que les valeurs de commande pilote influencent le turbocompresseur (31) en fonction d'un signal qui signale l'état de fonctionnement du démarrage (28) du moteur à combustion interne.

7. Dispositif selon au moins l'une des revendications 1 à 6, caractérisé en ce que le signal de sortie du circuit de réglage de la pression de suralimentation (13) est limité.

8. Dispositif selon la revendication 7, caractérisé en ce que pendant une limitation du signal de sortie du circuit de réglage de la pression de suralimentation, la limitation agit également simultanément sur la régulation de pression de suralimentation.

9. Dispositif selon au moins l'une des revendications 1 à 8, caractérisé en ce que la valeur de consigne du circuit de réglage du débit d'air est égale à zéro pour les petites charges du moteur à combustion interne.

10. Dispositif selon au moins l'une des revendications 1 à 9, caractérisé en ce que le signal influençant le turbocompresseur est limité à des valeurs maximales.

11. Dispositif selon au moins l'une des revendications 1 à 10, caractérisé en ce que la valeur réelle de la pression de suralimentation relative est formée par formation de la différence (35) de la valeur réelle de la pression de suralimentation absolue et de la pression atmosphérique.

12. Dispositif selon au moins l'une des revendications 1 à 11, caractérisé en ce que le turbocompresseur est commandé à des valeurs déterminées, prédéterminables, quand la différence entre la valeur réelle de la pression de suralimentation relative et de la valeur de consigne de la pression de suralimentation relative dépasse une valeur déterminée, prédéterminable, pendant une durée déterminée, prédéterminable.

13. Dispositif selon la revendication 12, caractérisé en ce qu'en plus, le débit de carburant alimenté au moteur à combustion interne est commandé à des valeurs déterminées, prédéterminables.

14. Dispositif selon la revendication 11 ou 12, caractérisé en ce que la valeur réelle de la pression de suralimentation relative est corrigée en fonction de la pression atmosphérique.

FIG.1

EP 0 178 485 B1

RW

FIG.2

DV

t

t

QL

B

A

C

FIG.3

RWG          RW